(19) Europäisches Patentamt

European Patent Office

Office européen des brevets

(11) **EP 1 013 995 A2**

(12) **EUROPÄISCHE PATENTANMELDUNG**

(43) Veröffentlichungstag:
28.06.2000 Patentblatt 2000/26

(51) Int. Cl.7: **F23G 7/00**, F23L 7/00

(21) Anmeldenummer: **99123286.9**

(22) Anmeldetag: **30.11.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.12.1998 DE 19858120**

(71) Anmelder:
**BASF AKTIENGESELLSCHAFT
67056 Ludwigshafen (DE)**

(72) Erfinder:
• **Domschke, Thomas Dr.
67346 Speyer (DE)**

• **Joa, Andreas
67435 Neustadt (DE)**
• **Steinebrunner, Klaus, Dr.
68723 Plankstadt (DE)**

(74) Vertreter:
**Isenbruck, Günter, Dr. et al
Patent- und Rechtsanwälte,
Bardehle-Pagenberg-Dost-Altenburg-Geissler-Isenbruck
Theodor-Heuss-Anlage 12
68165 Mannheim (DE)**

(54) **Verfahren zur thermischen Behandlung von nicht brennbaren Flüssigkeiten**

(57) Verfahren zur thermischen Behandlung von nicht brennbaren Flüssigkeiten in einem Brennraum einer Verbrennungsvorrichtung durch Kontaktieren der nicht brennbaren Flüssigkeit in Gegenwart mindestens eines reaktiven Gases mit einem Stützbrennstoff in dem Brennraum. Das erfindungsgemäße Verfahren zeichnet sich dadurch aus, daß die nicht brennbare Flüssigkeit und der Stützbrennstoff an verschiedenen Stellen in den Brennraum (1) eingespeist werden, daß vor dem Kontaktieren die nicht brennbare Flüssigkeit mit mindestens einem reaktiven Gas und der Stützbrennstoff mit mindestens einem inerten Gas vermischt werden und daß nicht brennbare Flüssigkeit und Stützbrennstoff vor dem Kontaktieren in dem Brennraum verdampft werden. Der Vorteil dieser Erfindung ist, daß insbesondere umweltschädliche Abwässer entsorgt werden, indem diese mittels eines Stützbrennstoffs verbrannt werden. Die benötigen Mengen an Stützbrennstoff sind bei dem Verfahren minimal und es werden nur geringe Mengen an Stickoxiden, Kohlenmonoxid und Ruß erzeugt.

Printed by Xerox (UK) Business Services
2.16.7 (HRS)/3.6

**Beschreibung**

Die Erfindung betrifft ein Verfahren und eine Vorrichtung zur thermischen Behandlung von nicht brennbaren Flüssigkeiten.

Mit thermischer Behandlung ist in diesem Zusammenhang gemeint, daß brennbare Bestandteile einer nicht brennbaren Flüssigkeit (zum Beispiel ein Abwasser) chemisch umgesetzt werden, während nicht brennbare Bestandteile in der Regel verdampft werden.

Für die Behandlung von verunreinigten Abwässern oder heizwertarmen flüssigen Abfällen haben sich in der Praxis verschiedene Verfahren bewährt. Neben den sogenannten generativen Verfahren (zum Beispiel Destillation, Extraktion, Adsorption) kommen insbesondere für die Behandlung von organisch belasteten Abwässern oxidative Abwasserbehandlungsverfahren (zum Beispiel Naßoxidation, Ozonolyse, Eindampfung/Verbrennung) zum Einsatz.

Im folgenden wird schwerpunktmäßig auf das Verfahren Eindampfung/Verbrennung - gewöhnlich auch „Abwasserverbrennung" genannt - eingegangen. Dieses Verfahren wird dann angewendet, wenn hoch belastete Abwasserströme (Anteil der Verunreinigungen größer 50 g/l) zu entsorgen sind. Eine Abwasserverbrennungsanlage besteht in der Regel aus der Abwasservorbehandlungsstufe (Neutralisation, Eindampfung), dem Hochtemperaturteil (Verbrennungsvorrichtung) sowie den nachgeschalteten Rauchgasreinigungseinrichtungen (Quench, Elektrofilter). Die Abwasser-Zusammensetzung - insbesondere die Art und Höhe der Ladung - bestimmt die verfahrenstechnische Auslegung der einzelnen Apparate. Dabei ist zu beachten, daß bereits Abwasser-Verunreinigungen im Spurenbereich (zum Beispiel S-, N-, P-, Cl-Verbindungen) zu Betriebsproblemen führen können.

Der Auslegung des Verbrennungsteils muß aus diesem Grunde besondere Aufmerksamkeit gewidmet werden. Bevor jedoch auf das Verbrennungsteil näher eingegangen wird, sollen einige wichtige Begriffe, die im folgenden verwendet werden, definiert werden. Bei den Prozessen, die bei der Abwasserverbrennung in dem Verbrennungsteil stattfinden können, handelt es sich insbesondere um chemische Umsetzungen wie beispielsweise Verbrennungen, Vergasungen, Oxidationen oder Pyrolysen. Alle diese chemischen Vorgänge werden im folgenden zusammenfassend als Verbrennung bezeichnet. Neben nicht brennbaren Flüssigkeiten werden auch unter athmosphärischen Bedingungen bei Temperaturen bis zu etwa 1000°C schwer brennbare oder schwer entzündliche Flüssigkeiten, als auch nicht entzündliche Flüssigkeiten als nicht brennbare Flüssigkeiten bezeichnet. Nicht brennbare Flüssigkeiten enthalten (im Sinne des Prinzips der Abwasserverbrennung) brennbare Komponenten. Das Wort Gas wird als Sammelbegriff für Gase oder Gasgemische verwendet. Unter dem Begriff Vermischen soll im folgenden auch Vermengen verstanden werden. Mit Inertgasen (inerten Gasen) sind in der Regel solche Gase gemeint, die nicht oder nur unter extremen Bedingungen (zum Beispiel: Temperaturen höher 2000°C und/oder Drücke höher 1000 bar) mit einem verwendeten Brennstoff chemisch umgesetzt werden können. Im Einzelfall können Inertgase (inerte Gase) jedoch auch solche Komponenten enthalten, die als solche mit dem eingesetzten Brennstoff chemisch reagieren können. Umgekehrt kann ein Brennstoff in Gegenwart eines reaktiven Gases verbrannt werden. Reaktive Gase sind insbesondere gasförmige Oxidationsmittel, wie zum Beispiel Sauerstoff oder Ozon enthaltende Gase. Dagegen enthalten inerte Gase, maximal soviel Oxidationsmittel, daß es beim Vermischen mit dem Stützbrennstoff bei Brennraumtemperatur nicht zur Zündung und damit nicht zur Verbrennung kommt.

Bei der Verbrennung einer nicht brennbaren Flüssigkeit ist ein Brennstoff, ein sogenannter Stützbrennstoff, notwendig. Der nicht brennbare Anteil der nicht brennbaren Flüssigkeit wird verdampft, und brennbare Bestandteile werden chemisch umgesetzt. Dabei werden in der Regel umweltverträglichere Stoffe erhalten. Besonders wichtig ist es, den Anteil an Kohlenmonoxid, Ruß und Stickoxiden zu minimieren. Außerdem besteht das Ziel, das Verhältnis von nicht brennbarer Abwasserflüssigkeit und benötigtem Stützbrennstoff zu optimieren, d.h. es soll bei der Verbrennung möglichst wenig Brennstoff verwendet werden. Die Rückgewinnung der bei der Verbrennung aufgebrachten Energie gestaltet sich in der Regel problematisch, da die in der nicht brennbaren Flüssigkeit (enthält zumeist Wasser) enthaltenen Komponenten, wie zum Beispiel Salze oder Halogene, das Material von Wärmetauschervorrichtungen stark angreifen würden. Die Sicherstellung eines ausreichenden Schadstoffumsatzes wird in der Regel durch eine Mindesttemperatur und einer entsprechenden Mindestverweilzeit gewährleistet. Die unerwünschte Bildung von Stickoxiden kann durch Erzeugung eines bestimmten Temperatur- und Sauerstoff-Konzentrationsprofiles im Brennraum beziehungsweise in der Flamme minimiert werden. Die technische Durchführung der Verbrennung ist für die Umweltverträglichkeit und Wirtschaftlichkeit der Verbrennung entscheidend. Dabei zeigt sich beispielsweise, daß die Zerstäubung eines Gemischs aus Stützbrennstoff und nicht brennbarer Flüssigkeit (zum Beispiel mittels einer Düse) vor der Verbrennung vorteilhaft ist. Dabei ist eine richtige Auslegung des Düse/Brenner/Brennkammer-Systems, d.h. Abstimmung von Zerstäubung und Verbrennung, von besonderer Bedeutung, wenn auch Abwässer mit hoher Beladung an organisch gebundenem Kohlenstoff durch Verbrennung aufgearbeitet werden sollen. Es ist im besonderen Maße darauf zu achten, daß die Verbrennungstemperatur weder zu hoch noch zu niedrig ist. Bei zu hoher Temperatur wird die Bildung von Stickoxiden begünstigt, während bei zu niedriger Temperatur unvollständige Verbrennung, Rußbildung und Kohlenmonoxid-Bildung erfolgt. Außerdem ist darauf zu achten, daß die Verbrennung in Gegenwart ausreichender Mengen an reaktivem Gas stattfindet, um insbesondere der Kohlenmonoxid- und Ruß-Bildung entgegenzuwirken. In der Technik werden zur Abwasserverbrennung (Verbrennung nicht brennbarer Flüssigkeiten) sogenannte Kombinationsbrenner eingesetzt, die als Stützbrennstoff Heizöl, Erdgas oder energiereiche Abfälle einsetzen. Diese Brenner sind so aufgebaut, daß mit dem Stützbrennstoff eine stabilisierte Flamme erzeugt wird und ein erzeugtes Spray der nicht brennbaren Flüssigkeit (erzeugt durch Zerstäubung in einem Gas) mit dieser Flamme beziehungsweise mit dem Ausbrandgebiet der Flamme vermischt wird.

In der Technik besteht ein besonderes Interesse, auch flüssige Stützbrennstoffe einzusetzen. Der Nachteil besteht jedoch darin, daß bei Verwendung vieler in der Technik eingesetzter Brenner eine starke Bildung von Ruß erfolgt, da die heiße Stützbrennstoffflamme durch die nicht brennbare Flüssigkeit gequencht wird.

In der EP-B-0 463 218 wird ein Verfahren und eine Vorrichtung beschrieben, bei der die Ausbildung einer stabilisierten Flamme vermieden wird. Dabei wird der Brennstoff getrennt von der Verbrennungsluft mit hoher Geschwindigkeit (hohem Axialimpuls) in einen Brennraum eingespeist, so daß die Verbrennungsluft vor dem Brennstoffkontakt mit größeren Mengen ausgebrannten Rauchgases vermischt wird. Es können dabei auch flüssige Brennstoffe durch „flammenlose Oxidation" umgesetzt werden. Soll jedoch nach diesem Verfahren auch eine Abwasserverbrennung durchgeführt werden, so müssen nicht brennbare Flüssigkeit und flüssiger Stützbrennstoff miteinander mischbar sein (was aber in der Regel nicht der Fall ist), oder Stützbrennstoff und nicht brennbare Flüssigkeiten müssen vor der Einspeisung in den Brenner getrennt im Zentrum des Brenners zerstäubt werden. Dabei besteht der Nachteil, daß Abwassertröpfchen und Stützbrennstofftröpfchen in der Regel vor der vollständigen Verdampfung in eingeblasene Strahlen der Verbrennungsluft eindringen und somit Wassertröpfchen (oder andere Tröpfchen bestehend aus nicht brennbaren Flüssigkeiten) auf gezündete Stützbrennstofftröpfchen stoßen, und dadurch Rußbildung erfolgt.

Der vorliegenden Erfindung liegt die Aufgabe zugrunde, ein wirtschaftlicheres und umweltgerechteres Verfahren zur Verbrennung nicht brennbarer Flüssigkeiten hervorzubringen. Dabei soll die Menge an benötigtem Stützbrennstoff minimiert werden, und es sollen insbesondere auch flüssige Stützbrennstoffe, mit hohen Anteilen an Hochsiedern (wie zum Beispiel Heizöl) einsetzbar sein. Bei der Verbrennung ist es von Bedeutung, daß minimale Schadstofffrachten an Kohlenmonoxid, Stickoxiden und Ruß entstehen. Außerdem soll eine möglichst vollständige Umsetzung der verbrennbaren Anteile in der nicht brennbaren Flüssigkeit erzielt werden.

Die Lösung dieser Aufgabe geht aus von dem Verfahren zur thermischen Behandlung von nicht brennbaren Flüssigkeiten in einem Brennraum einer Verbrennungsvorrichtung durch Kontaktieren der nicht brennbaren Flüssigkeit in Gegenwart mindestens eines reaktiven Gases mit einem Stützbrennstoff in dem Brennraum.

Das erfindungsgemäße Verfahren ist dadurch gekennzeichnet, daß die nicht brennbare Flüssigkeit und der Stützbrennstoff an verschiedenen Stellen in den Brennraum eingespeist werden, daß vor dem Kontaktieren die nicht brennbare Flüssigkeit mit mindestens einem reaktiven Gas und der Stützbrennstoff mit mindestens einem inerten Gas vermischt werden und daß nicht brennbare Flüssigkeit und Stützbrennstoff vor dem Kontaktieren in dem Brennraum verdampft werden.

In einer bevorzugten Ausführungsform werden Stützbrennstoff und nicht brennbare Flüssigkeit zerstäubt in den Brennraum eingespeist.

Erfindungsgemäß wird auch eine Vorrichtung zur Durchführung des vorstehenden Verfahrens bereitgestellt, wobei diese folgende Einrichtungen enthält:

a) einen Breunraum,
b) eine Zuleitung für gasförmigen Stützbrennstoff und/oder eine Zuleitung für flüssigen Stützbrennstoff,
c) eine Zuleitung für die nicht brennbare Flüssigkeit,
d) eine Zuleitung für reaktives Gas,
e) eine Zuleitung für inertes Gas,
f) eine Düse zur Einspeisung des Gemischs aus Stützbrennstoff und inertem Gas in den Brennraum und
g) mehrere Düsen zur Einspeisung des Gemischs aus nicht brennbarer Flüssigkeit und reaktivem Gas in den Brennraum.

In einer bevorzugten Ausführungsform ist außerhalb des Brennraums ein Zerstäuber für flüssigen Stützbrennstoff und/oder ein Zerstäuber für die nicht brennbare Flüssigkeit, angeordnet.

Die Düse zur Einspeisung des Gemisches aus Stützbrennstoff und inertem Gas und/oder die Düsen zur Einspeisung des Gemisches aus nicht brennbarer Flüssigkeit und reaktivem Gas können auch nicht verjüngte Rohrenden sein. Dies ist in der Regel aber nur dann der Fall, wenn die Verbrennungsvorrichtung, die vorstehend beschriebenen Zerstäuber für flüssigen Stützbrennstoff und für die nicht brennbare Flüssigkeit, aufweist. Flüssigkeits/Gas-Spray wird in diesem Fall durch die Zerstäuber erzeugt und anschließend durch die Düsen in den Brennraum eingespeist.

Die Vermischung der nicht brennbaren Flüssigkeit mit reaktivem Gas und/oder die des Stützbrennstoffs mit inertem Gas erfolg entweder vor der Einspeisung außerhalb des Brennraums (in der Regel durch die Zerstäuber) oder während der Einspeisung in den Brennraum, bevorzugt im Bereich der zur Einspeisung vorgesehenen Düsen (Flüssigkeits/Gas-Spray wird in diesem Fall durch den Einsatz der Düsen erzeugt). Als Stützbrennstoff kann entweder ein Gas oder eine Flüssigkeit verwendet werden. Der Einsatz einer Flüssigkeit ist jedoch bevorzugt. Falls als Stützbrennstoff eine Flüssigkeit verwendet wird, wird diese in der Regel durch Zerstäubung in inertem Gas (zum Beispiel Stickstoff oder Dampf) mit letzterem vermischt und anschließend wird das erzeugte Gemisch mit hoher Axialgeschwindigkeit (in der Regel mindestens 20 m/s) durch eine oder mehrere Düsen in den Brennraum eingesprüht. Mit Axialgeschwindigkeit ist in diesem Zusammenhang die impulsgemittelte axiale Austrittsgeschwindigkeit des Gas/Flüssigkeitsgemischs gemeint (axial bezieht sich in diesem Zusammenhang auf die gradlinig aus der Düse austretende Materie). Die impulsgemittelte Axialgeschwindigkeit (impulsgemittelte axiale Austrittsgeschwindigkeit) $w'$ eines Gas-Flüssigkeitssprays berechnet sich dann nach folgender Formel ($\dot{m}$ = Massenstrom, $w$ = Austrittsgeschwindigkeit, $\dot{m}w$ = Impulsstrom, Z = Zerstäubergas, G = Gas (ein getrennt vom Zerstäubergas eingeführtes Gas), S = Schall, A = nicht brennbare Flüssigkeit):

$$w'=\frac{\dot{m}_A w_A+\dot{m}_Z w_S+\dot{m}_L w_L}{\dot{m}_A+\dot{m}_Z+\dot{m}_L}$$

Auch die nicht brennbare Flüssigkeit und reaktives Gas werden bevorzugt durch Zerstäubung der nicht brennbaren Flüssigkeit in dem reaktiven Gas miteinander vermischt, und das erzeugte Gemisch wird mit hoher Axialgeschwindigkeit durch eine oder mehrere Düsen in den Brennraum eingesprüht. Die impulsgemittelte Axialgeschwindigkeit, mit der das erzeugte Gemisch in den Brennraum eingesprüht wird, beträgt beim Austritt aus den Düsen in der Regel zwischen 20 und 120 m/s, bevorzugt zwischen 50 und 100 m/s.

Typischerweise ist die Decke (Fläche an der Oberseite) des Brennraums eine (meist ebene) Fläche, die Öffnungen aufweist, wobei die letzteren den Ausgängen, der in der Verbrennungsapparatur enthaltenen Düsen, entsprechen. In einer bevorzugten Ausführungsform sind mehrere Düsen zur Einspeisung des Gemischs aus nicht brennbarer Flüssigkeit und reaktivem Gas so angeordnet, daß diese die Düse zur Einspeisung des Gemischs aus Stützbrennstoff und inertem Gas (bevorzugt symmetrisch) umgeben. Dabei sind die Düsen zur Einspeisung des Gemischs aus nicht brennbarer Flüssigkeit und reaktivem Gas in der Regel auf einem Kreis angeordnet, in dessen Mittelpunkt sich die Düse zur Einspeisung des Gemischs aus Stützbrennstoff und inertem Gas befindet. Dieser Kreis weist dann bevorzugt einen Durchmesser auf, der 3 bis 20 mal, bevorzugt 5 bis 10 mal so groß ist, wie vergleichsweise der Innendurchmesser oder der äquivalente Durchmesser der Düsen zur Einspeisung des Gemischs aus nicht brennbarer Flüssigkeit und reaktivem Gas. Die Düsen zur Einspeisung des Gemischs aus nicht brennbarer Flüssigkeit und reaktivem Gas sind meist in gleichem Abstand zueinander angeordnet. Durch die erfindungsgemäße Ausgestaltung der Verbrennungsvorrichtung wird sichergestellt, daß die nicht brennbare Flüssigkeit in dem Brennraum - durch „Rücksaugung" heißer, ausgebrannter Rauchgase - schnell verdampft, ohne mit Brennstofftropfen in Kontakt zu kommen. Das erzeugte Brennstoffspray wird ebenfalls von heißem, „rückgesaugten" Rauchgas (bei der Verbrennung entstehendes Gas) verdampft. Das Gesamtgemisch aus reaktivem Gas, verdampfter, nicht brennbarer Flüssigkeit und verdampften Stützbrennstoff verbrennt zumeist flammenlos. Flammenlose Verbrennung bedeutet in der Regel Verbrennung bei lokal niedrigeren Temperaturen, so daß die unerwünschte Stickoxid-Bildung weitgehend unterdrückt wird. Außerdem erfolgt keine Quenchung gezündeter Brennstofftröpfchen, so daß bei dem erfindungsgemäßen Verfahren keine Rußbildung erfolgt. Die benötigte Menge an Stützbrennstoff ist dabei vergleichsweise gering (entsprechende Daten sind in den Beispielen aufgeführt), da es bereits bei deutlich geringerem spezifischen Brennstoffeinsatz zu einer stabilen Umsetzung kommt.

Die nicht brennbare Flüssigkeit fällt typischerweise als zu entsorgender Prozeßabfall, als Rückstand oder als Abwässer an. Das sind beispielsweise heizwertarme flüssige Prozeßrückstände bzw. Abfälle, die insbesondere mit organischen Rückständen hoch belastet sind. Vor der Verbrennung werden die entsprechenden Flüssigkeiten, die im Regelfall häufig Wasser oder andere nicht brennbare Flüssigkeiten enthalten, zum Beispiel durch Eindampfung, eingeengt. Zweckmäßigerweise enthält die nicht brennbare Flüssigkeit ein oder mehrere Komponenten, die während der thermischen Behandlung chemisch umgesetzt werden (Prinzip der Abwasserverbrennung). Außer nicht brennbaren Flüssigkeiten können auch nicht brennbare Dispersionen thermisch behandelt werden, die aus flüssigen Phasen bestehen. Mit thermischer Behandlung ist somit gemeint, daß brennbare Bestandteile einer nicht brennbaren Flüssigkeit chemisch umgesetzt (verbrannt) werden, während nicht brennbare Bestandteile in der Regel verdampft werden. Die Verdampfung der nicht brennbaren Flüssigkeit und des Stützbrennstoffs erfolgen in der Regel vollständig, wobei die Verdampfung insbesondere auf Aufheizung durch „Rauchgasansaugung" zurückzuführen ist.

Als Verbrennungsprodukte organischer Rückstände entstehen dabei meist größtenteils Kohlendioxid und Wasser, die in die Umwelt entlassen werden dürfen.

Als inertes Gas wird in der Regel ein Gas eingesetzt, mit dem ein Stützbrennstoff, sofern dieser in einer aus dem inerten Gas und dem Stützbrennstoff bestehenden Mischung vorliegt, nicht verbrannt werden kann. Für jeden Brennstoff muß somit eine individuelle Definition für inertes Gas hervorgebracht werden, denn bezogen auf manche Brennstoffe kann ein Gas inert sein - bezogen auf andere Brennstoffe jedoch nicht (die Zündeigenschaften sind je nach Brennstoff verschieden). Meist kommt als inertes Gas Stickstoff und/oder Wasserdampf und/oder Abgas in Frage. In einigen Fällen kann jedoch zum Beispiel auch Luft als inertes Gas verwendet werden (Luft ist dann nicht in der Lage, die in diesen Fällen eingesetzten Brennstoffe zu zünden).

Als reaktives Gas kann insbesondere Luft oder ein anderes Sauerstoff enthaltendes Gas eingesetzt werden, das 10 bis 100 Vol.-%, bevorzugt 20 bis 100 Vol.%, Sauerstoff aufweist. Prinzipiell eignen sich alle reaktiven Gase, die mit Komponenten der nicht brennbaren Flüssigkeit chemisch umgesetzt werden können. Insbesondere kommen oxidierende Gase wie Sauerstoff oder Ozon in Frage.

Wie bereits einleitend erwähnt ist die Verbrennungstemperatur bei der Abwasserverbrennung wesentlich. Der Brennraum der erfindungsgemäßen Verbrennungsvorrichtung ist meist thermisch isoliert. In dem Brennraum liegen in der Regel Temperaturen von 500 bis 2000°C, bevorzugt von 800 bis 1200°C, vor. Bei diesen Temperaturen erfolgt meist weitgehend vollständige Verbrennung, der in der nicht brennbaren Flüssigkeit enthaltenden Rückstände, und es wird gleichzeitig einer Rußbildung sowie Kohlenmonoxid-Stickoxid-Bildung entgegengewirkt.

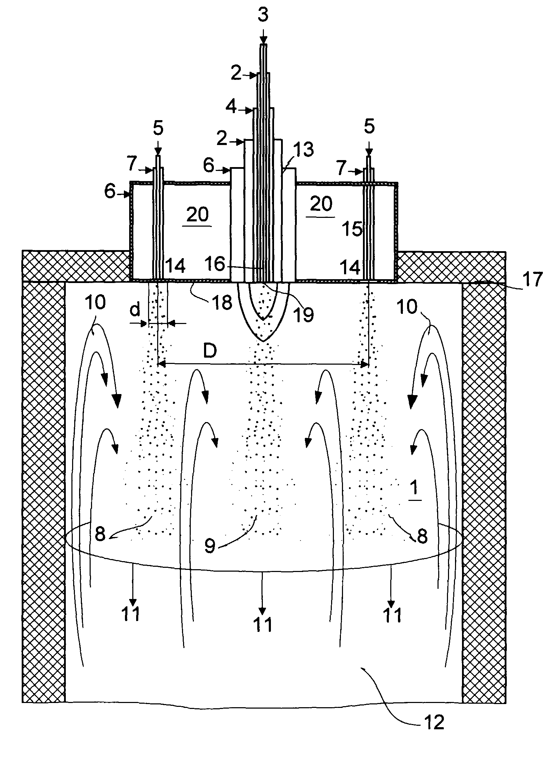

In der Zeichnung ist ein Ausführungsbeispiel der Erfindung dargestellt. Figur 1 zeigt dabei eine typische Ausführungsform der erfindungsgemäßen Verbrennungsvorrichtung (das Grundprinzip des erfindungsgemäßen Verfahrens kann durch diese veranschaulicht werden). Diese enthält unter anderem einen Brennraum 1, Düsen 14 zur Einspeisung des Gemischs aus nicht brennbarer Flüssigkeit und reaktivem Gas, Zerstäuber 15 für die nicht brennbare Flüssigkeit, Zerstäuber 16 für flüssigen Stützbrennstoff und einen Anfahrbrenner 13. Der Brennraum 1 ist thermisch isoliert (adiabatisch oder teiladiabatisch) und wird zudem mit dem Anfahrbrenner 13 (zum Beispiel ein handelsüblicher Erdgasbrenner) auf eine Temperatur von ca. 900°C erhitzt. Danach wird die Luftzufuhr auf die Düsen 14 zur Einspeisung des Gemischs aus nicht brennbarer Flüssigkeit und reaktivem Gas (das sind in der Regel Hochgeschwindigkeitsluftdüsen) umgestellt. Im flammenlosen Betriebszustand kann der Brennstoff Erdgas durch ein anderes Brenngas, einen Flüssigbrennstoff oder durch energiereichen Flüssigabfall (Verbrennungsenthalpie größer als 20 kJ/g) ersetzt werden. Der Flüssigbrennstoff (Stützbrennstoff) wird in diesem Fall mit einem Zerstäubungsgas (zum Beispiel Luft, wenn durch den Einsatz von Luft die Zündgrenze nicht erreicht wird - der Einsatz von Stickstoff oder Wasserdampf ist hier auch möglich) fein zerstäubt. Hierzu wird ein Zerstäuber 16 für flüssigen Stützbrennstoff, vorzugsweise als extern zerstäubender Zweistoffzerstäuber ausgebildet, eingesetzt. Bei Flüssigkeitsbrennstoffen erhöhter Zähigkeit und/oder erhöhtem Hochsiederanteil wird der Brennstoff vorgeheizt und vorzugsweise mit Wasserdampf oder vorgeheiztem Stickstoff zerstäubt. Die nicht brennbare Flüssigkeit wird mit einem oder mehreren Zerstäubern 15 für die nicht brennbare Flüssigkeit, häufig ebenfalls als extern zerstäubende Zweistoffzerstäuber ausgebildet, die sich im Zentrum der Düsen 14 zur Einspeisung des Gemischs aus nicht brennbarer Flüssigkeit und reaktivem Gas befinden, zerstäubt. Die Düsen 14 und die Zerstäuber 15 sind so dimensioniert, daß das erzeugte Gemisch aus nicht brennbarer Flüssigkeit und reaktivem Gas mit einer impulsgemittelten Axialgeschwindigkeit von mindestens 20 m/s und höchstens 150 m/s, vorzugsweise zwischen 50 und 100 m/s austritt.

Bei Brennern geringerer Leistung kann direkt die Verbrennungsluft (reaktives Gas) als Zerstäubungsgas benutzt werden, indem der Luftkasten 20 mit einem Druck größer 2 bar versorgt wird. Die Verbrennungsluft tritt dann mit Schallgeschwinidigkeit aus und wird vor dem Einspeisen in den Brennraum 1 durch den Zerstäuber 15 mit der nicht brennbaren Flüssigkeit gemischt. Die Düsen 14 zur Einspeisung dieses Gemischs aus nicht brennbarer Flüssigkeit und reaktivem Gas in den Brennraum 1 sind in diesem Fall einfache (nicht verjüngte) Rohrenden.

Bei Brennern größerer Leistung wäre der Einsatz von Preßluft als Verbrennungsluftversorgung unwirtschaftlich. In einem solchen Fall wird der Zerstäuber 15 als Zweistoffzerstäuber ausgeführt, die Zerstäubungsluft (reaktives Gas) wird durch die Zuleitung 7 als Preßluft bereitgestellt. Der Anteil der Preßluft am Massenstrom des eingespeisten Gemischs beträgt ca. 10 - 15 %. Der restliche Luftbedarf (Bedarf an reaktivem Gas) wird über die Zuleitung 6 durch ein Gebläse bereitgestellt. Das Gemisch aus nicht brennbarer Flüssigkeit/reaktivem Gas bewirkt eine intensive Zirkulation heißer Rauchgase 10 aus dem Ausbrandgebiet 11. Durch die Penetration der heißen Rauchgase 10 werden die Tröpfchen im Gemisch nicht brennbarer Flüssigkeit/reaktives Gas verdampft. Die Tröpfchen des flüssigen Stützbrennstoffs im Gemisch werden vor dem Luftkontakt ebenfalls weitgehend vorverdampft oder vergast. Im Ausbrandgebiet 11 herrscht eine so niedrige Sauerstoffkonzentration, daß es zu keiner gezündeten Verbrennung kommen kann. Die Temperaturen überschreiten an keinem Ort die adiabate Flammentemperatur des Gesamtgemischs von 900 - 1000°C. Hierdurch wird sowohl die Rußbildung als auch die thermische Stickoxidbildung stark gemindert.

In der Zeichnung ist, wie vorstehend beschrieben, eine bevorzugte Ausführungsform der erfindungsgemäßen Verbrennungsvorrichtung dargestellt. Es handelt sich um einen Brenner, der für ca. 50 kW thermische Leistung ausgelegt ist. Dieser enthält einen ionisationsüberwachten, elektrisch zündbaren Gasbrenner (Anfahrbrenner 13), in dessen Zentrum ein Flüssigkeitszerstäuber (allgemein als Zerstäuber 16 für flüssigen Stützbrennstoff bezeichnet) eingebaut ist. Dieser Flüssigkeitszerstäuber kann zwei Flüssigkeitsströme mit einem gasförmigen Hilfsmedium zerstäuben. Es bildet sich ein Sprühkegel mit einem Öffnungswinkel von ca. 19° aus. Um das Außenrohr des Gasbrenners ist ein kreisringförmiger Luftkasten 20 installiert. An der Stirnseite des Luftkastens befinden sich 4 Hochgeschwindigkeitsdüsen (Düsen 14 zur Einspeisung des Gemischs aus nicht brennbarer Flüssigkeit und reaktivem Gas), aus denen die Verbrennungsluft (reaktives Gas), die über Zuleitung 7 zugeführt wird, mit Schallgeschwindigkeit ausströmt. In die Gaskanäle wurde zentral jeweils ein dünnes Flüssigkeitsrohr (Zuleitung 5 für die nicht brennbare Flüssigkeit) eingebaut, durch das ein Abwasser oder andere heizwertarmer Flüssigabfall zugeführt werden kann. Diese Zuleitung 5 für die nicht brennbare Flüssigkeit endet kurz vor der Gasaustrittsbohrung. Das Wasser wird durch die Luftströmung aufgenommen und zerstäubt. Es bildet sich auch in diesem Fall ein Sprühkegel mit einem Öffnungswinkel von ca. 19° aus. Der Brenner ist in einen ausgemauerten Brennraum 1 (Innendurchmesser 25 cm, Länge 3 m) eingebaut. Die thermischen Verluste des Brennraums 1 betragen bei einer mittleren Innentemperatur von beispielsweise ca. 1000°C etwa 5 kW. Wird über die Zuleitung 3 für flüssigen Stützbrennstoff ein ausreichender Strom an hochkalorischem Abfall oder Flüssigbrennstoff zugeführt, kann der Anfahrbrenner 13 abgeschaltet werden. Zur Überwachung der Brennerfunktion wird dann statt der Ionisationsüberwachung die Brennraumtemperatur über das Thermoelement 12 überwacht.

Im folgenden wird die Erfindung anhand von Ausführungsbeispielen näher beschrieben.

**Beispiel 1:**

Zunächst wurde der Brennraum 1 mit dem Anfahrbrenner 13 auf eine Temperatur größer 850°C aufgeheizt. Nun wurde die Verbrennungsluftzufuhr vom Anfahsbrenner 13 auf die Hochgeschwindigkeitsluftdüsen (Düsen 14 zur Einspeisung des Gemischs aus nicht brennbarer Flüssigkeit und reaktivem Gas) umgelenkt. Über 4 Abwasserzerstäuber 15 wurden anschließend insgesamt 5 l Wasser pro Stunde zugeführt. Der verwendete Erdgasstrom (Erdgas wurde als gasförmiger Stützbrennstoff eingesetzt) wurde auf ein $Nm^3$/h zurückgenommen, der Luftstrom so eingestellt, daß im trockenen Rauchgas ein verbleibender Sauerstoffanteil von 3 % gemessen wurde. Im Brennraum 1 stellte sich ein Wandtemperaturprofil zwischen 750°C und 850°C ein. Der Ausbrand war nahezu vollständig (2 ppm CO im trockenen Rauchgas). Die Stickoxid-Konzentration im trockenen Rauchgas betrug 7 bis 8 ppm. Die Bestimmung des Kohlenmonoxids, Stickoxid-Gehaltes erfolgte durch Infrarot- bzw. durch UV-Absorptionsspektrometrie. Der spezifische Brennstoffeinsatz betrug 0,2 $Nm^3$/kg, also nur 0,01 $Nm^3$/kg mehr als der theoretische kalorische Mindestwert zur Erreichung der Brennraumtemperatur.

Wird der Brenner als herkömmlicher Flammenverdampfungsbrenner betrieben, also Erdgas und Luft über einen Brenner zugegeben und das Abwasser über einen Zentralzerstäuber zugegeben, ist für einen stabilen Betrieb eine Erdgasmenge von 0,27 $Nm^3$/kg notwendig. Die Stickoxidemissionen steigen auf 40 ppm (Bestimmung durch Infrarot- bzw. durch UV-Absorptionsspektrometrie).

**Beispiel 2:**

Aus dem Betriebszustand des Beispiels 1 wurde sukzessive der Erdgasstrom zurückgenommen und gleichzeitig über den Zentralzerstäuber (ein Zerstäuber 16 für flüssigen Stützbrennstoff) Heizöl zugegeben. Es ergab sich ein stabiler Betriebszustand bei 1 l Heizöl pro Stunde mit 2 $Nm^3$/h $N_2$ als Zerstäubungsgas (kein Erdgas). Der Ausbrand war ebenfalls vollständig. Die Stickoxid-Emissionen lagen bei 15 ppm.

Bezugszeichenliste:

| | |
|---|---|
| 1 | Brennraum |
| 2 | Zuleitung für gasförmigen Stützbrennstoff |
| 3 | Zuleitung für flüssigen Stützbrennstoff |
| 4 | Zuleitung für inertes Gas |
| 5 | Zuleitung für die nicht brennbare Flüssigkeit |
| 6 | Zuleitung für reaktives Gas |
| 7 | Zuleitung für reaktives Gas |
| 8 | Spray, enthaltend nicht brennbare Flüssigkeit und reaktives Gas |
| 9 | Spray, enthaltend Stützbrennstoff und inertes Gas |
| 10 | heiße Rauchgase |
| 11 | Ausbrandgebiet |
| 12 | Thermoelement |
| 13 | Anfahrbrenner |
| 14 | Düsen zur Einspeisung des Gemischs aus nicht brennbarer Flüssigkeit und reaktivem Gas |
| 15 | Zerstäuber für die nicht brennbare Flüssigkeit |
| 16 | Zerstäuber für flüssigen Stützbrennstoff |
| 17 | Verkleidung zur thermischen Isolation des Brennraums |
| 18 | Decke des Brennraums |
| 19 | Düse zur Einspeisung des Gemischs aus Stützbrennstoff und inertem Gas |
| 20 | Luftkasten |

**Patentansprüche**

1. Verfahren zur thermischen Behandlung von nicht brennbaren Flüssigkeiten in einem Brennraum (1) einer Verbrennungsvorrichtung durch Kontaktieren der nicht brennbaren Flüssigkeit in Gegenwart mindestens eines reaktiven Gases mit einem Stützbrennstoff in dem Brennraum (1), dadurch gekennzeichnet, daß die nicht brennbare Flüssigkeit und der Stützbrennstoff an verschiedenen Stellen in den Brennraum (1) eingespeist werden, daß vor dem Kontaktieren die nicht brennbare Flüssigkeit mit mindestens einem reaktiven Gas und der Stützbrennstoff mit mindestens einem inerten Gas vermischt werden und daß nicht brennbare Flüssigkeit und Stützbrennstoff vor dem Kontaktieren in dem Brennraum verdampft werden.

2. Verfahren nach Anspruch 1, dadurch gekennzeichnet, daß die Vermischung der nicht brennbaren Flüssigkeit mit reaktivem Gas und/oder die des Stützbrennstoffs mit inertem Gas vor der Einspeisung außerhalb des Brennraums (1) oder während der Einspeisung in den Brennraum (1), bevorzugt im Bereich zur Einspeisung vorgesehener Düsen (14, 19), erfolgt.

3. Verfahren nach Anspruch 1 oder 2, dadurch gekennzeichnet, daß als Stützbrennstoff eine Flüssigkeit eingesetzt wird.

4. Verfahren nach einem der Ansprüche 1 bis 3, dadurch gekennzeichnet, daß als Stützbrennstoff eine Flüssigkeit eingesetzt wird, die durch Zerstäubung in inertem Gas mit letzterem vermischt wird und daß das erzeugte Gemisch mit hoher Axialgeschwindigkeit durch eine oder mehrere Düsen (19) in den Brennraum (1) eingesprüht wird.

5. Verfahren nach einem der Ansprüche 1 bis 4, dadurch gekennzeichnet, daß die nicht brennbare Flüssigkeit und reaktives Gas, durch Zerstäubung der nicht brennbaren Flüssigkeit in dem reaktiven Gas, miteinander vermischt werden und daß das erzeugte Gemisch mit hoher Axialgeschwindigkeit durch eine oder mehrere Düsen (14) in den Brennraum (1) eingesprüht wird.

6. Verfahren nach Anspruch 5, dadurch gekennzeichnet, daß die impulsgemittelte Axialgeschwindigkeit, mit der das erzeugte Gemisch in den Brennraum (1) gesprüht wird, beim Austritt aus den Düsen zwischen 20 und 150 m/s, bevorzugt zwischen 50 und 100 m/s beträgt.

7. Verfahren nach einem der Ansprüche 1 bis 6, dadurch gekennzeichnet, daß die nicht brennbare Flüssigkeit als zu entsorgender Prozeßabfall, als Rückstand oder als Abwässer anfällt.

8. Verfahren nach einem der Ansprüche 1 bis 7, dadurch gekennzeichnet, daß die nicht brennbare Flüssigkeit eine oder mehrere Komponenten enthält, die wahrend der thermischen Behandlung chemisch umgesetzt werden.

9. Verfahren nach einem der Ansprüche 1 bis 8, dadurch gekennzeichnet, daß als inertes Gas Gas eingesetzt wird, mit dem ein Stützbrennstoff, sofern dieser in einer aus dem inerten Gas und dem Stützbrennstoff bestehenden Mischung vorliegt, nicht verbrannt werden kann.

10. Verfahren nach einem der Ansprüche 1 bis 9, dadurch gekennzeichnet, daß als inertes Gas Stickstoff und/oder Wasserdampf und/oder Abgas eingesetzt wird.

11. Verfahren nach einem der Ansprüche 1 bis 10, dadurch gekennzeichnet, daß als reaktives Gas Luft oder ein anderes Sauerstoff enthaltendes Gas eingesetzt wird, das 10 bis 100 Vol.%, bevorzugt 20 bis 100 Vol.% Sauerstoff aufweist.

12. Verfahren nach einem der Ansprüche 1 bis 11, dadurch gekennzeichnet, daß in dem Brennraum (1) eine Temperatur von 500 bis 2000°C, bevorzugt von 800 bis 1200°C vorliegt.

13. Vorrichtung zur Durchführung des Verfahrens nach einem der Ansprüche 1 bis 12 enthaltend folgende Einrichtungen:

a) einen Brennraum (1)
b) eine Zuleitung (2) für gasförmigen Stützbrennstoff und/oder eine Zuleitung (3) für flüssigen Stützbrennstoff,
c) eine Zuleitung (5) für die nicht brennbare Flüssigkeit,
d) eine Zuleitung (7) für reaktives Gas,
e) eine Zuleitung (4) für inertes Gas,
f) eine Düse (19) zur Einspeisung des Gemischs aus Stützbrennstoff und inertem Gas in den Brennraum (1) und
g) mehrere Düsen (14) zur Einspeisung des Gemischs aus nicht brennbarer Flüssigkeit und reaktivem Gas in den Brennraum (1).

14. Vorrichtung nach Anspruch 13, dadurch gekennzeichnet, daß außerhalb des Brennraums (1) ein Zerstäuber (16) für flüssigen Stützbrennstoff und/oder ein Zerstäuber (15) für die nicht brennbare Flüssigkeit, angeordnet ist.

15. Vorrichtung nach Anspruch 13 oder 14, dadurch gekennzeichnet, daß die Düse (19) zur Einspei-

**EP 1 013 995 A2**

sung des Gemisches aus Stützbrennstoff und inertem Gas und/oder die Düsen (14) zur Einspeisung des Gemisches aus nicht brennbarer Flüssigkeit und reaktivem Gas nicht verjüngte Rohrenden sind.

16. Vorrichtung nach einem der Ansprüche 13 bis 15, dadurch gekennzeichnet, daß mehrere Düsen (14) zur Einspeisung des Gemisches aus nicht brennbarer Flüssigkeit und reaktivem Gas auf einer Linie angeordnet sind, die die Düse (19) zur Einspeisung des Gemischs aus Stützbrennstoff und inertem Gas umgibt.

17. Vorrichtung nach einem der Ansprüche 13 bis 16, dadurch gekennzeichnet, daß die Düsen (14) zur Einspeisung des Gemischs aus nicht brennbarer Flüssigkeit und reaktivem Gas auf einem Kreis angeordnet sind, in dessen Mittelpunkt sich die Düse (19) zur Einspeisung des Gemischs aus Stützbrennstoff und inertem Gas befindet.

18. Vorrichtung nach Anspruch 17, dadurch gekennzeichnet, daß der Kreis einen Durchmesser (D) aufweist, der 3 bis 20 mal, bevorzugt 5 bis 10 mal so groß ist, wie vergleichsweise der Innendurchmesser (d) oder der äquivalente Durchmesser (d) der Düsen (14) zur Einspeisung des Gemischs aus nicht brennbarer Flüssigkeit und reaktivem Gas.

19. Vorrichtung nach einem der Ansprüche 16 bis 18, dadurch gekennzeichnet, daß die Düsen (14) zur Einspeisung des Gemischs aus nicht brennbarer Flüssigkeit und reaktivem Gas in gleichem Abstand zueinander angeordnet sind.